Europäisches Patentamt

(19) European Patent Office

Office européen des brevets

(11) Publication number: **0 456 481 A2**

# (12) EUROPEAN PATENT APPLICATION

(21) Application number: 91304148.9

(22) Date of filing: 08.05.91

(51) Int. Cl.⁵: **B23K 35/32, B23K 35/30**

(30) Priority: 11.05.90 JP 122123/90

(43) Date of publication of application:
13.11.91 Bulletin 91/46

(84) Designated Contracting States:
DE FR GB

(71) Applicant: **DAIDO TOKUSHUKO KABUSHIKI KAISHA**
**11-18, Nishiki 1-chome**
**Naka-ku Nagoya 460 (JP)**

(72) Inventor: **Shimizu, Takayoshi**
**37 Aza-Kitamon, Ohaza-Takata,**
**Ichinomiya-shi,**
**Aichi-ken 491 (JP)**
Inventor: **Nakamura, Kiyoshi**
**42-7 Kakihata, Kagiya-cho, Tokai-shi,**
**Aichi-ken 477, (JP)**
Inventor: **Suml, Kazuhito**
**2-229 Mineoka-cho. Hodogaya-ku,**
**Yokohama-shi, Kanagawa-ken 240, (JP)**

(74) Representative: **Stoner, Gerard Patrick et al**
**Mewburn Ellis 2 Cursitor Street**
**London EC4A 1BQ (GB)**

(54) Titanium-containing brazing materials.

(57) A titanium-based powdery brazing material comprises 10 % by weight or more of titanium and 10 % by weight or more of zirconium with the proviso that the total weight of Ti and Zr lies in the range of 40 to 90 % by weight, and further includes 10 to 60 % by weight of copper and/or nickel.

EP 0 456 481 A2

The present invention relates to a titanium-containing brazing material usable for joining together members or parts of e.g. titanium, titanium alloys, zirconium, zirconium alloys, ceramics and other materials.

Prior Art

In general, more difficulty is encountered in joining together parts of such active metals as Ti and Zr and ceramics than in bonding together parts of usual steel materials. So far, techniques making use of Ti-based alloys have been known to join together parts of such Ti, Zr or ceramic materials (see Japanese Patent Laid-Open Publication Nos. Sho. 59-126739, 59-220299, 60-127092 and 63-201070).

Such Ti-based alloy brazing materials, which are how found to be fragile, have heretofore been prepared by quenching molten metals into foils.

However, a problem with the conventional Ti-based brazing materials is that they are ill suited for bonding together minuscule parts or members of a complicated profile in section of joined members due to their foil shape.

In view of the above-mentioned problem, it would be desirable to provide a Ti-based brazing material enabling minuscule parts or members of a complicated profile in section of joined members to be bonded together by relatively simple operations.

We have found that we can achieve good results by the use of a Ti-containing powdery brazing material characterized by comprising 10 % by weight or more of titanium and 10 % by weight or more of zirconium with the proviso that the total amount of Ti and Zr lies in the range of 40 to 90 % by weight, and further including 10 to 60 % by weight of copper and/or nickel.

BRIEF DESCRIPTION OF THE DRAWINGS

The present invention will be explained specifically but not exclusively with reference to the accompanying drawings, in which:-
Figure 1 is an enlarged sectional view of the welded joint of clad pipes obtained with a brazing material embodying this invention,
Figure 2 is a sectional view of the welded joint of clad pipes, and
Figure 3 and 4 are views illustrating the brazing of alumina to stainless steel.

ILLUSTRATIVE EXPLANATION

In the present invention, the amounts of Ti and Zr should each be at least 10 % by weight to increase the bonding strength of brazing material to active metals. The total amount of Ti and Zr must be at least 40 % by weight and at most 90 % by weight, because at less than 40 % the bonding strength of brazing material to active metals or ceramic materials is likely to drop and at more than 90 % by weight the melting point of brazing material becomes so high that brazing operations can become troublesome and inefficient.

The quantities of Cu and/or Ni should be at least 10 % by weight to lower the melting point of brazing material and at most 60 % by weight, because at higher than 60 % by weight the content of Ti or Zr decreases with a decrease in the brazing strength of brazing material.

Because of its powdery form, the brazing material of this invention can be properly applied to the surfaces of parts to be joined together for their proper brazing. In particular, the powdery brazing material of this invention is much easier to handle in brazing operations as compared with conventional wire or foil brazing materials. This enables minuscule parts or members of a complicated profile in section to be joined together within a shorter time of period and with ease.

The powdery brazing material of this invention may be prepared by atomizing, mixing or other suitable techniques.

For padding brazing, by way of example alone, the powdery brazing material may be coated onto the regions of parts to be joined together by plasma spraying.
Alternatively, such binders as resins may be mixed with the powdery brazing material into a paste for its automatic feeding through a dispenser, etc.

In the present invention, moreover, it is also possible to add resins and organic solvents to the powdery brazing material having such composition mentioned above and a particle size of 250 μm or below, and then to mix them into a paste.

The particle size is preferably not more than 250 μm, and most preferably is about 150μm for this type of use, because the powdery material with a particle size larger than 250 μm may be difficult to be mixed uniformly. In the case of screen process printing, the particle size should be about 50 μm preferably.

In the above case, materials to be mixed with the powdery brazing material include such resins, for instance, as acrylic, methyl cellulose, ethyl cellulose, nitrocellulose, polyimide and poly methyl methacrylate, and such organic solvents as alcohol, acetone, toluene, xylene, terpineol, buthyl carbitol and other kinds of acetate.

EXAMPLES AND COMPARATIVE EXAMPLE

By way of example alone, the present invention will now be explained in greater detail with reference to the following examples.

## POWDER MANUFACTURE EXAMPLES

### 1. Manufacture by atomising

A powdery brazing material can be obtained by atomising, e.g. as explained below.

Sponge Ti, sponge Zr, electrolyzed copper and Ni pellets were prepared in appropriate quantities so that the resulting powdery brazing material would contain 50% by weight of Ti, 30% by weight of Zr, 10% by weight of Cu, and 10% by weight of Ni. These materials were put into a crucible made of CaO, and dissolved together by high-frequency heating. When the materials were perfectly dissolved out, an outlet stopper at the bottom of the crucible of molten metal was opened so that the molten metal fell down from the outlet. At the same time, a certain amount of Ar gas was injected from a plurality of injection nozzles towards the flow of molten metal at a gauge pressure of 7 kg/cm$^2$. The pressurised injected gas broke up and cooled down the molten metal, making a metal powder brazing material of the stated composition.

### 2. Manufacture by mechanical alloying

It is also possible to manufacture a powdery brazing material by mechanical alloying, e.g. as follows.

Finely powdered Ti, Zr, Cu and Ni materials were prepared in appropriate quantities so that a resulting powdery brazing material would contain 50% by weight of Ti, 30% by weight of Zr, 10% by weight of Cu and 10% by weight of Ni. 2 kilograms of these materials were put into a container made of stainless steel and having a capacity of 3 litres. 10 kg of balls, made of high carbon bearing steel and having a diameter of 15 millimeters, were also put into the container. The inner space of the container was evacuated and then filled with N$_2$ gas. Approximately 10 ml of hexane, which serves as a lubricant, was added to the materials in the container. The container was then rotated at the speed of 200 revolutions per minute for 100 hours. A mechanically-alloyed Ti-based powdery brazing material was thereby obtained.

## BRAZING EXAMPLES

### Example 1

In the instant example, clad pipes are joined together.

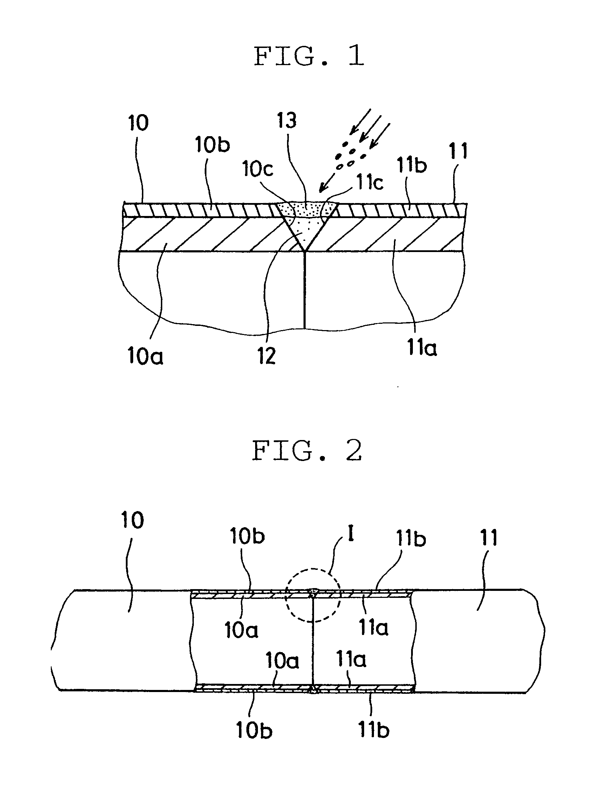

As illustrated in Figures 1 and 2, clad pipes 10 and 11 each comprise an inner layer 10a or 11a made of stainless steel and an outer layer 10a or 11b made of Ti. The end of one pipe to be joined to the other is chamfered such that it slopes down, as shown at 10c or 11c.

First, both the clad pipes 10 and 11 are butted to each other at the ends of the stainless steel layers 10a and 11a to form a V-shaped groove therebetween by their sections 10c and 11c. In that state, the stainless steel layers 10a and 11a are welded together with a stainless welder rod. Then, the powdery brazing material, while melted by plasma, etc., is applied between the Ti layers 10b and 11b with an air stream for padding welding. In this example, the brazing material obtained by atomizing , for instance, can consist of 50 % by weight of Ti, 30 % by weight of Zr, 10 % by weight of Cu and 10 % by weight of Ni and have a particle size of 150 μm or less, and brazing can occur at a temperature of 850 to 900 °C. In this way, the clad pipes 10 and 11 are firmly welded to each other through welded joints 12 and 13.

Thus, it is possible to improve the bonding strength of the two clad pipes by relatively simple operations and without giving rise to any intermetallic compound, since the powdery brazing material used has a relatively low melting point. In addition, it is possible to reduce brazing costs because the brazing material can be supplied in proper amounts.

### Example 2

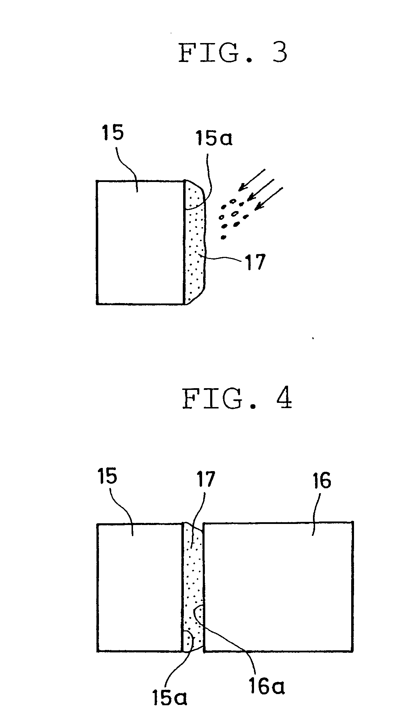

In the instant example, ceramic and metal parts are joined together. As illustrated in Figures 3 and 4 showing the joining of an alumina piece 15 to a stainless steel piece 16, the powdery brazing material, while melted by plasma, etc., is first sprayed onto a surface 15a of the alumina piece 15 to be joined with the use of an air stream. At this time, the thickness of a brazing layer 17 may be controlled by varying spraying time, the amount of the air stream applied and other factors. Then, a surface 16a of the stainless steel piece 16 to be joined is brazed to the brazing layer 17 sprayed onto the surface 15a of the alumina piece 15. In this example, the powdery brazing material used, for instance, can consist of 25 % by weight of Ti, 25 % by weight of Zr and 50 % by weight of Cu, have a particle size of 74 μm or below, and possess a relatively low melting point of 800 to 900 °C, thus making it possible to carry out brazing at a relatively low temperature of 900 to 1000 °C. The above-mentioned brazing operations may be reversed in order.

Thus, the joining of alumina to stainless steel can be performed by relatively simple operations within a short period of time without causing degradation of bonding strength. Precise brazing can also be performed, because the thickness of the brazing layer forming a joint can be chosen freely.

### Example 3

In the instant example, powdery brazing material consisting of 40 % by weight of Ti, 20 % by weight of Zr and 20 % by weight of Cu and having a particle size of 60 mesh (250 μm) or below is blended and mixed into a paste, with ethyl cellulose in respective amounts such as to have a powdery brazing material-/ethyl cellulose ratio of 95 to 5 by weight and a proper quantity of buthyl carbitol. Then this resultant paste is coated onto a circular plate made of aluminium with a piece of aluminum pipe placed on its surface, and heated in Ar gas at temperatures of 900 °C and 1000 °C for 15 minutes respectively in order to examine the bonding and wetting in their joining.

The result was that at the temperature of 900 °C, the aluminium pipe and the circular plate were joined together firmly but found without ample wetting. At the temperature of 1000 °C, firm joining and extremely good wetting were achieved. Thus, it has become evident that this paste has excellent feature to be used for joining members or parts made of ceramics. In this case, however, ceramic material to be used should have the melting point of 100 °C higher than that of the paste according to the present example, 840 °C.

Comparative Example 1

In the instant example, powdery brazing material consisting of 20 % by weight of Ti, 15 % by weight of Zr, 25 % by weight of Ni and 40 % by weight of Cu and having a particle size of 60 mesh (250 μm) or below is blended and mixed into a paste with ethyl cellulose in respective amounts such as to have a powdery brazing material/ethyl cellulose ratio of 95 to 5 by weight and a proper quantity of buthyl carbitol. Then this resultant paste was coated onto a circular plate made of aluminium with a piece of aluminum pipe placed on its surface, and heated in Ar gas at temperatures of 900 °C and 1000 °C for 15 minutes respectively in order to examine the bonding and wetting in their joining.

The result was that under these two conditions with the temperatures of 900 °C and 1000 °C, the aluminium pipe could not be joined with the circular plate.

The Ti-based powdery brazing material according to this invention may be applied to any metal or ceramic material having a melting point higher than that thereof, for instance, such metals as Ti, Zr, W, Mo, stainless steel, tool steel, invar and koval as well as nearly all ceramics such as those based on oxides, carbides, nitrides, lithia, barium titanate and ferrite.

According to this technique as explained above, wherein the required amount of the powdery brazing material can be precisely fed onto surfaces to be joined together, it is possible to braze together minuscule parts or intricately profiled members by relatively simple operations and obtain joints of increased strength. Moreover, the powdery brazing materials embodying the invention have an advantage of being made more flowable by addition of binders, etc., so that brazing can be easily automated. In the case of screening process printing, for example, automatic coating and joining of the brazing material may become possible.

## Claims

1. A titanium-containing powdery brazing material comprising

   10% by weight or more of titanium and 10% by weight or more of zirconium, provided that the total weight of Ti and Zr lies in the range of 40 to 90% by weight, and

   10 to 60% by weight of copper and/or nickel.

2. A brazing material comprising a powdery material having a particle diameter of 250 μm or below and a composition according to claim 1, blended and mixed into a paste with resin and organic solvent.

3. A method of brazing comprising positioning a brazing material, comprising a powder of

   at least 10 wt% titanium;

   at least 10 wt% zirconium, the total proportion of titanium and zirconium being 40-90 wt%, and

   10-60 wt% copper and/or nickel,

   between two parts to be brazed and heating to melt the powder and effect brazing.

4. A method according to claim 3 in which the powder has a particle size generally less than 250μm.

5. A method according to claim 3 or claim 4 in which the heating is at a temperature or temperatures of less than 1000°C.

6. A method according to any one of claims 3 to 5 in which the brazing method is in the form of an organic paste containing the powder.

## FIG. 1

## FIG. 2

# FIG. 3

# FIG. 4